(19) Europäisches Patentamt
European Patent Office
Office européen des brevets

(11) **EP 3 767 359 B1**

(12) **EUROPEAN PATENT SPECIFICATION**

(45) Date of publication and mention
of the grant of the patent:
**24.01.2024   Bulletin 2024/04**

(21) Application number: **18909504.5**

(22) Date of filing: **16.10.2018**

(51) International Patent Classification (IPC):
**G02B 7/09** *(2021.01)*      **G02B 3/12** *(2006.01)*
**G02B 5/00** *(2006.01)*      **G02B 3/14** *(2006.01)*
**G02B 7/08** *(2021.01)*      **G02B 7/36** *(2021.01)*
**G02B 26/00** *(2006.01)*

(52) Cooperative Patent Classification (CPC):
**G02B 7/36; G02B 3/14; G02B 5/005; G02B 7/08;
G02B 26/004; G02B 26/005;** G02B 2207/115;
H04M 2250/52

(86) International application number:
**PCT/KR2018/012207**

(87) International publication number:
**WO 2019/177220 (19.09.2019 Gazette 2019/38)**

(54) **LIQUID IRIS, OPTICAL DEVICE COMPRISING SAME, AND MOBILE TERMINAL**

FLÜSSIGE IRIS, OPTISCHE VORRICHTUNG DAMIT UND MOBILES ENDGERÄT

IRIS LIQUIDE, DISPOSITIF OPTIQUE LE COMPRENANT ET TERMINAL MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **16.03.2018   US 201862643771 P**

(43) Date of publication of application:
**20.01.2021   Bulletin 2021/03**

(73) Proprietor: **LG Electronics Inc.
07336 SEOUL (KR)**

(72) Inventors:
• **KANG, Byeongkil**
**Seoul 06772 (KR)**
• **KIM, Hakhae**
**Seoul 06772 (KR)**
• **HONG, Jaewan**
**Seoul 06772 (KR)**
• **JOO, Sungbum**
**Seoul 06772 (KR)**

(74) Representative: **Vossius & Partner
Patentanwälte Rechtsanwälte mbB
Siebertstrasse 3
81675 München (DE)**

(56) References cited:
**EP-A1- 3 255 491       KR-A- 20140 008 699
KR-A- 20140 089 852   KR-A- 20140 111 062
KR-A- 20150 113 538   KR-A- 20170 139 982
US-A1- 2014 191 107   US-B1- 9 128 350**

• **Stefan Schuhladen: "Miniaturized tunable
apertures", , 2 January 2016 (2016-01-02),
XP055438238, Retrieved from the Internet:
URL:https://d-nb.info/1119452724/34 [retrieved
on 2021-11-11]**

## Description

## TECHNICAL FIELD

The present disclosure relates to a liquid iris, optical device including the same, and mobile terminal and, more particularly, to a liquid iris for adjusting the amount of light penetration based on an electrowetting technology, optical device including the same, and mobile terminal.

## BACKGROUND ART

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As such functions become more diversified, the mobile terminal can support more complicated functions such as capturing images or video, reproducing music or video files, playing games, receiving broadcast signals, and the like. By comprehensively and collectively implementing such functions, the mobile terminal may be embodied in the form of a multimedia player or device.

Photography, which is one function of the multimedia device, is an extremely important function. Thus, many researches have been made to provide a camera capable of providing a high-quality image and reduce the size thereof. In recent years, the camera functionality of a mobile terminal has been improved enough to replace a digital camera, and a small camera module has been installed and used in various devices.

In optical devices typified by a camera, a mechanical aperture (or iris) with blades has been used to adjust the amount of light penetration.

However, in the case of the mechanical iris, there are restrictions in implementing the steps of the iris due to mechanical accuracy limitations, and as a result, brightness changes in a graded manner.

In addition, serval blades are required to implement a circular iris through which light passes, and in this case, a space for installing the iris increases as well. That is, it may be difficult to apply an iris with blades to small electronic devices.

Further, considering that the conventional mechanical iris uses a magnet to operate its blades, it may cause interference between magnets if a camera performs autofocus based on a voice coil motor (VCM).

Therefore, there are needs for solving the aforementioned problems in the optical device including the iris for adjusting the amount of light penetration.
US 9 128 350 B1 discloses a micro-iris unit and camera module including the same. Stefan Schuhladen discloses Minaturized tunable apertures (dissertation, January 1, 2016). EP 3 255 491 A1 relates to a mobile terminal having a camera module provided with two lens assemblies. US 2014/191107 A1 relates to a method and apparatus for adjusting an aperture in an optical system.

## DISCLOSURE

## TECHNICAL PROBLEM

The invention is defined in the independent claim. Dependent claims describe preferred embodiments. The object of the present disclosure is to provide a liquid iris capable of changing an iris value F continuously, reducing a circular space required for light penetration, and coexisting with a voice coil motor (VCM) based autofocus structure, optical device including the same, and mobile terminal.

## TECHNICAL SOLUTION

In one aspect of the present disclosure, a liquid iris for adjusting the amount of light penetration based on an applied electrical signal is provided. The liquid iris is defined by independent claim 1.

Further aspects of the present invention are defined by the dependent claims 2-12.

## ADVANTAGEOUS EFFECTS

According to the present disclosure, the liquid iris may have the following effects.

According to various embodiments of the present disclosure, the liquid iris may continuously adjust the amount of light penetration. Thus, when an iris value is changed, the liquid iris may obtain a smooth image with no sudden changes in brightness.

According to various embodiments of the present disclosure, the liquid iris may be formed in the shape of a circle with no increase in the size.

According to various embodiments of the present disclosure, the liquid iris may be provided in a voice coil motor (VCM) based autofocus driving unit without interference therebetween.

## DESCRIPTION OF DRAWINGS

FIG. 1A is a block diagram for explaining a mobile terminal according to an embodiment of the present disclosure.

FIGS. 1B and 1C are conceptual views illustrating one example of a mobile terminal, viewed from different directions.

FIG. 2 is a conceptual cross-sectional view of an optical device related to the present disclosure.

FIG. 3 is a view for explaining a conventional mechanical iris (or aperture) for adjusting an iris value F.

FIG. 4 is a conceptual cross-sectional view of a liquid iris according to the present disclosure.

FIG. 5 is a conceptual view for explaining a method of operating the liquid iris according to the present disclosure.

FIG. 6 is a view illustrating an example of a transparent electrode pattern included in the liquid iris according to the present disclosure.

FIG. 7 is a view illustrating another example of the transparent electrode pattern included in the liquid iris according to the present disclosure.

FIG. 8 is a conceptual view for explaining and comparing changes in the iris value F in liquid and mechanical irises according to an embodiment of the present disclosure.

FIG. 9 is a view for explaining bokeh generated by the liquid iris according to an embodiment of the present disclosure.

FIG. 10 is a block diagram illustrating an optical device including a liquid iris according to an embodiment of the present disclosure.

FIG. 11 is a side cross-sectional view for explaining a structure in which a liquid iris according to an embodiment of the present disclosure is coupled to an optical device including a voice coil motor (VCM) based auto focus actuator (AF) and an optical image stabilizer (OIS).

## BEST MODE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra-books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

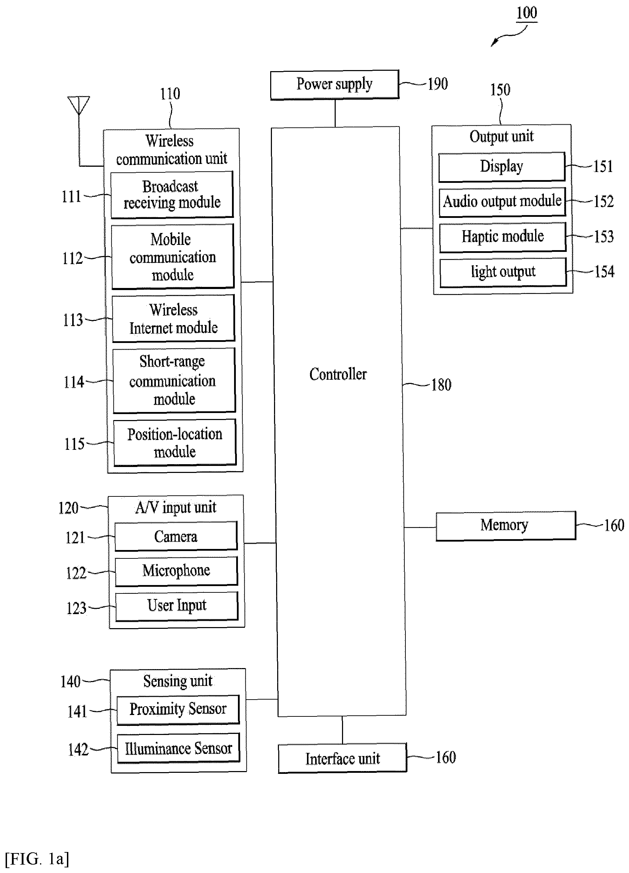

Reference is now made to FIGS. 1A-1C. FIG. 1A is a block diagram of a mobile terminal in accordance with the present disclosure,

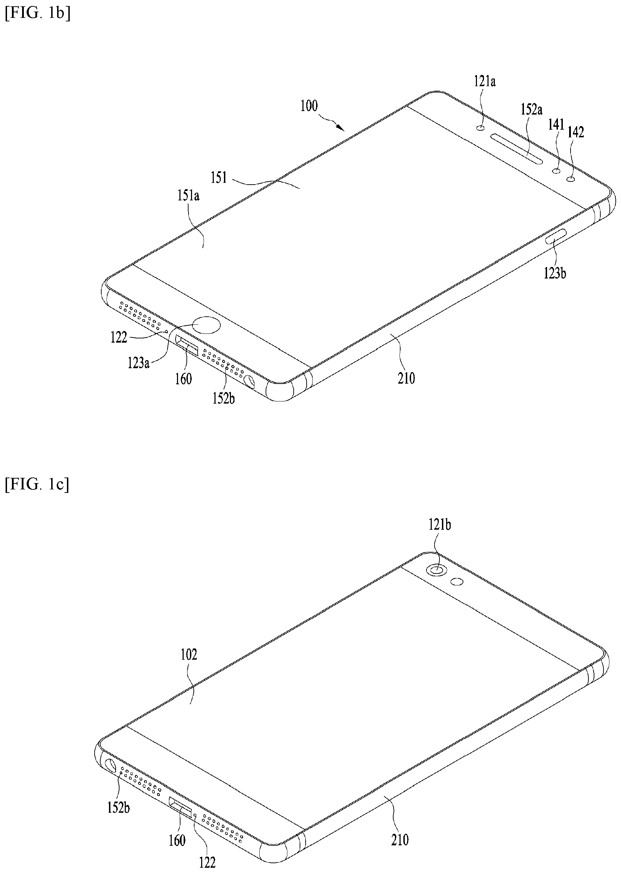

FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170.

As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the components may cooperatively operate to implement the operation, control, or control method of the mobile terminal 100 according to various embodiments, which will be described in the following. The operation, control, or control method of the mobile terminal 100 may be implemented in the mobile terminal 100 by activation of at least one application program stored in the memory 170.

The input unit 120 may be configured to permit various types of input to the mobile terminal 120. Examples of such input include audio, image, video, data, and user input. Image and video input is often obtained using one or more cameras 121.

The camera 121 may be a part of the mobile terminal 100 according to the present disclosure or include the mobile terminal 100. That is, the camera 121 and the mobile terminal 100 according to the present disclosure may include at least some common features or configurations.

Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen.

The proximity sensor 141 may sense proximity touch, and proximity touch patterns (for example, distance, direction, speed, time, position, moving status, and the like).

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

Here, considering the mobile terminal 100 as at least one assembly, the terminal body may be understood as a concept referring to the assembly.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal includes a display unit 151, a first and a second audio output modules 151a/151b, a proximity sensor 141, an illumination sensor 142, an optical output module 154, a first and a second cameras 121a/121b, a first and a second manipulation units 123a/123b, a microphone 122, interface unit 160 and the like.

It will be described for the mobile terminal as shown in FIGS. 1B and 1C. The display unit 151, the first audio output module 151a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 151b and the second camera 121b are arranged in rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

Input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

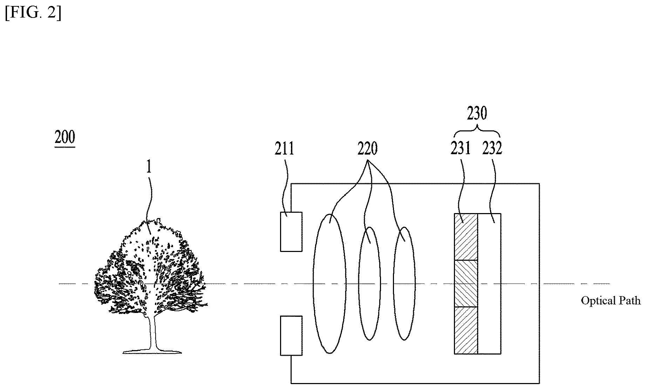

FIG. 2 is a conceptual cross-sectional view of an optical device 200 related to the present disclosure.

The optical device 200 of FIG. 2 is an example of the camera 121 included in the mobile terminal 100 shown in FIG. 1A.

The optical device 200 may include an iris (aperture) 211, a lens 220, and an image sensor 230.

The light reflected or radiated from a subject 1 is refracted after passing through at least one lens 220. The light refracted through the lens 220 reaches the image sensor 230.

The iris 211 is positioned at a point before the lens 220 in the optical path and adjusts the amount of light that reaches the lens 220 and image sensor 230.

The image sensor 230 may include an RGB filter 231 for sensing RGB colors and a sensor array for converting an optical signal into an electrical signal.

The image sensor 230 may include masks for detecting a phase difference at the top or bottom of the RBB filter 231.

An image processor may generate an RGB image based on an electrical signal transmitted from the image sensor 230 (not shown in the drawing).

A plurality of lenses 220 may be provided, and each lens may have a fixed shape, for example, a glass lens, a plastic lens, etc.

However, when the lens 220 has a fixed shape, for example, a glass lens, a plastic lens, etc., that is, when the index of refraction is fixed, there may be restrictions on the following functions: auto-focusing, image stabilization, and so on.

To solve this problem, at least one lens 220 may be implemented as a liquid lens with a variable shape.

The liquid lens may be classified into a membrane liquid lens capable of being modified by an external physical force and an electrowetting liquid lens capable of being modified by electrical interaction.

The electrowetting liquid lens may be more suitable than the membrane liquid lens, which is modified by the external physical force, for adjusting the refraction of the liquid lens in that the electrowetting liquid lens uses the electrical interaction.

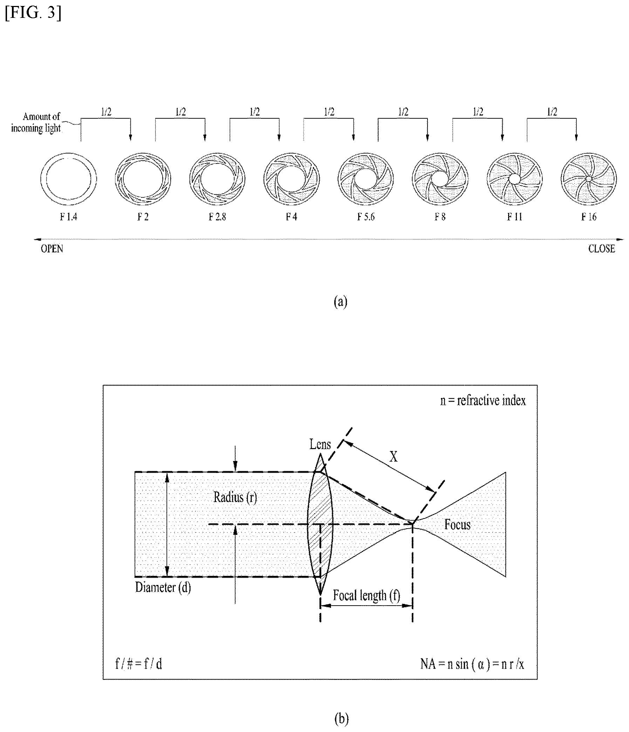

FIG. 3 is a view for explaining a conventional mechanical iris for adjusting an iris value F.

An iris refers to a disk-shaped device capable of controlling the amount of light that passes through a lens by adjusting the size of a hole in a camera or microscope. In particular, in the case of the microscope, the iris plays a role of limiting the amount of light that comes from a reflector.

As the iris value F increases, the size of a circle, i.e., opening of an adjustment device disposed on the lens decreases, and thus the amount of incoming light decreases. On the contrary, as the iris value F decreases, the size of the circle increase, and thus the amount of incoming light increases. If the amount of light is not correctly controlled, an image may be too bright or dark when developed. In the case of the microscope, it may be difficult to clearly observe a preparation.

In addition, considering that the depth increases or decreases depending on the opening of the iris, the iris is a critical element in photographing subjects. Even if the same iris value is used, the depth may decrease as the distance between a subject and a background increases.

FIG. 3 (a) is a conceptual view illustrating an example of controlling the amount of light incident on a hole by opening or closing a mechanical iris.

Specifically, FIG. 3 (a) shows that an effective opening on which light is incident decreases as the iris transitions from the opened state to the closed state. In addition, FIG. 3 (a) also shows that an iris value (F, f/#) depends on the amount of incoming light.

The iris value (F, f/#) is also illustrated in FIG. 3 (b). In optics, the iris value (F, f/#) is defined as follows: (focal length of lens)/(diameter of entrance pupil). The entrance pupil refers to an image of the iris seen through the front of the lens. As the diameter of the iris increases, the value of F decreases and the amount of incoming light increases.

$$F = f/\# = f/d$$

**(where f=focal length and d=diameter of entrance pupil)**

Specifically, the mechanical iris shown in FIG. 3 (a) has 7 blades for controlling the amount of light incident on the hole.

The blades of the mechanical iris operate based on a voice coil motor (VCM). In this case, there may be restrictions in implementing the steps of the iris due to limitations on the performance and mechanical accuracy of a driving unit for driving the blades.

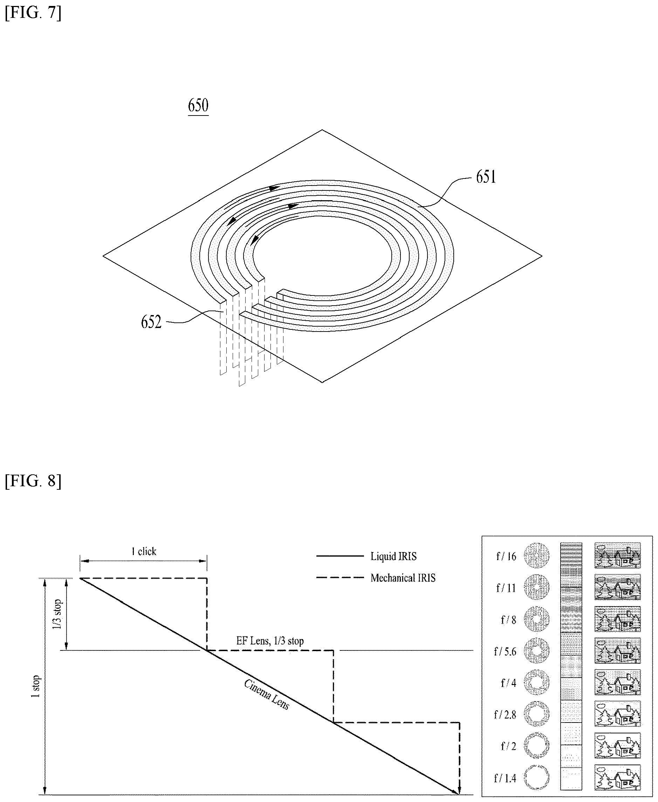

To implement the effective opening as shown in FIG. 8 (a), the circular mechanical iris requires multiple blades. The multiple blades may increase the volume of a camera including the mechanical iris, and thus there may be difficulties in applying such multiple blades to prescribed electronic devices.

The mechanical iris also requires a space that allows the blades to move, and the volume of the camera including the mechanical iris may increase due to the VCM for driving the blades. Thus, it is difficult to apply the mechanical iris to small electronic devices.

In addition, considering that the mechanical iris consumes a large amount of power, it may increase the battery consumption of portal electronic devices.

Further, since the mechanical iris requires a large amount of time for adjustment and stabilization thereof, the time required for obtaining a stable image may also increase.

To solve the above problems of the mechanical iris, the present disclosure provides a liquid iris based on an electrowetting technology.

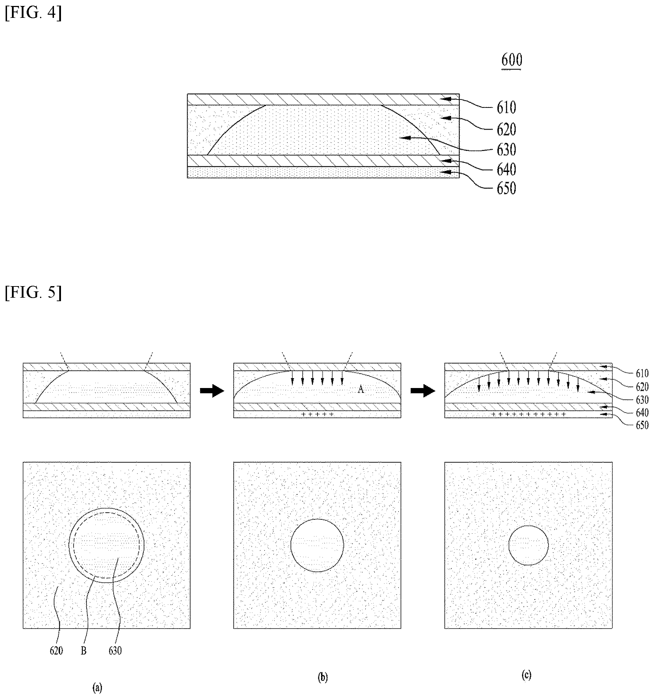

FIG. 4 is a side cross-sectional view of a liquid iris 600 according to an embodiment of the present disclosure.

The liquid iris 600 for adjusting the amount of light penetration based on an applied electrical signal may include an insulating layer 640 made of a transparent material, a cover glass 610 configured to be spaced apart from the insulating layer 640, a first fluid 630 configured to be provided between the insulating layer 640 and the cover glass 610 and form a path through which light passes, a second fluid 620 configured to be provided between the insulating layer 640 and the cover glass 610, which is an opaque fluid and immiscible with the first fluid 630, a transparent electrode pattern 650 configured to be provided under the insulating layer 640 and form a potential difference from the first fluid 630, and a controller configured to change the surface curvature of the first fluid 630 by controlling the potential difference and control an area in which the first fluid 630 is in contact with the cover glass 610.

The first fluid 630 may include electrolytes or correspond to a polar liquid.

The second fluid 630 may include no electrolytes or correspond to a non-polar liquid.

Specifically, the second fluid 630 may be a black oil for blocking the visible and infrared bands of the light.

The first fluid 630 and the second fluid 640 may not be mixed with each other and fill a space formed by the insulating layer 640 and the cover glass 610.

The surface tension of the first fluid 630 may be changed by a voltage applied to the transparent electrode pattern 650, and it may change the surface curvature. In response to the movement of the first fluid 630, the second fluid 620 may move to fill the space between the insulating layer 640 and the cover glass 610.

The space between the insulating layer 640 and the cover glass 610 may include a partition (not shown in the drawing) that covers the side thereof. Thus, the first fluid 630 and the second fluid 620 may not be mixed with each other within the fixed space, and the movement of one fluid may cause the other fluid to move.

The first fluid 630 may be simultaneously in contact with the insulating layer 640, which is made of the transparent material, and the cover glass 610 and form the path through which the light passes. However, in some cases, the first fluid 630 may be separated from the cover glass 610 so that the light may be completely blocked.

The transparent electrode pattern 650 may be made of a transparent conductive material such as indium tin oxide (ITO), indium zinc oxide (IZO), indium gallium zinc oxide (IGZO), etc. As a result, the transparent electrode pattern 650 may have a high penetration ratio and a low electrical resistance, and it may be stable in the room temperature.

The shape of the transparent electro pattern 650 may determine the shape of a contact surface on which the first fluid 630 is in contact with the cover glass 610. The contact surface on which the first fluid 630 is in contact with the cover glass 610 may correspond to an effective opening through which the light passes. Preferably, the contact surface may be circular. Details will be described later with reference to FIG. 5.

To form a phase difference between the first fluid 630 and the transparent electrode pattern 650, an electrode (not shown in the drawing) may be connected to the first fluid 630.

The electrode connected to the first fluid 630 may be provided under the cover glass 610. The electrode may be a wire made of the same transparent material as the transparent electrode pattern 650.

In some cases, the first fluid 630 may be separated from the cover glass 610. Thus, the electrode connected to the first fluid 630 may be formed such that it protrudes from the side partition.

FIG. 5 is a conceptual view for explaining the operation of the liquid iris 600.

Specifically, FIGS. 5 (a) to 5 (c) illustrate the side cross-section of the liquid iris 600 and the top surface of the cover glass 610.

FIGS. 5 (a) to 5 (c) illustrate an embodiment in which the size of the contact surface B on which the first fluid 630 is in contact with the cover glass 610 decreases as the potential difference between the first fluid 630 and the transparent electrode pattern 650 increases.

Referring to FIG. 5 (a), when there is no potential difference between the first fluid 630 and the transparent electrode pattern 650, the size of the contact surface B on which the first fluid 630 is in contact with the cover glass 610 may have the largest size due to the surface tension, i.e., the tendency of shrinking.

When there is no potential difference between the first fluid 630 and the transparent electrode pattern 350, the surface curvature may have the greatest value, and thus, the contact surface B on which the first fluid 630 is in contact with the cover glass 610 may have the largest size.

However, a predetermined potential difference may be applied to maintain the circular shape of the contact surface B on which the first fluid 630 is in contact with the cover glass 610. Hereinafter, details will be described with reference to FIG. 5.

FIGS. 5 (b) and 5 (c) illustrate that a gravitation force A between the first fluid 630 and the transparent electrode pattern 650 increases as the potential difference between the first fluid 630 and the transparent electrode pattern 650 increases.

That is, it can be seen from FIGS. 5 (a) to 5 (c) that the surface curvature of the first fluid 630 decreases as the potential difference between the first fluid 630 and the transparent electrode pattern 650 increases.

When the potential difference between the first fluid 630 and the transparent electrode pattern 650 increases, the first fluid 630 is spread out widely while it is in contact with the insulating layer 640, and thus, the surface curvature of the first fluid 630 decreases.

As the surface curvature of the first fluid 630 decreases, the size of the contact surface B on which the first fluid 630 is in contact with the cover glass 610 decreases.

As the size of the contact surface B on which the first fluid 630 is in contact with the cover glass 610 decreases, the size of an area in which the second fluid 620 is in contact with the cover glass 610 relatively increases. Thus, considering that the second fluid is made of a light blocking material, the amount of light passing through the liquid iris 600 decreases.

Since the first fluid 630 forms a path through which the light passes, the first fluid 630 may be in contact with both the cover glass 610 and the insulating layer 640. However, in some cases, the first fluid 630 may be separated from the cover glass 610 so as to block the light.

The liquid iris 600 according to the present disclosure may continuously change the potential difference between the first fluid 630 and the transparent electrode pattern 650 through the controller.

Accordingly, the liquid iris 600 according to the present disclosure may have no steps by continuously changing the potential difference. Details will be described later with reference to FIG. 8.

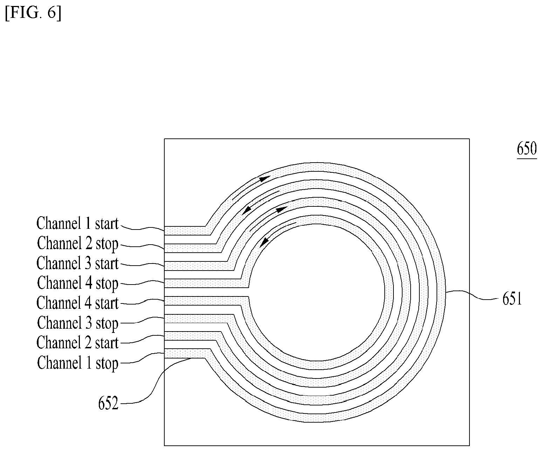

FIG. 6 is a view illustrating an example of the transparent electrode pattern 650 included in the liquid iris 600 according to the present disclosure.

To provide the effective opening (or contact surface) to the iris 600, the transparent electrode pattern may be formed in the shape of a circle.

That is, the transparent electrode pattern 650 may have a circular pattern, and the first fluid 630 may form the circular contact surface B on the cover glass 610 based on the potential difference (see FIG. 5).

When the transparent electrode pattern 650 is formed in the shape of a circle, the first fluid 630 may have the shape of a dome based on the phase difference, and the second fluid 620 may fill the remaining space between the cover glass 610 and the insulating layer 640 (see FIG. 5).

In this case, the contact surface B on which the first fluid 630 is in contact with the cover glass 610 may be circular, and the remaining bottom surface of the cover glass 610 is in contact with second fluid 620. Thus, light may pass though only the contact surface B.

A predetermined potential difference may be formed between the first fluid 630 and the transparent electrode pattern 650. The predetermined potential difference may not only maintain the circular shape of the contact surface B but also allow the first fluid 630 to always maintain the dome shape under the second fluid 620, which may have a different weight from the first fluid 630.

According to the present disclosure, the controller may allow the first fluid 630 to maintain the dome shape by generating the potential difference between the first fluid 630 and the transparent electrode pattern 650, control the surface curvature of the first fluid 630 by adjusting the potential difference, and adjust the size of the circular contact surface B.

However, the transparent electrode pattern 650 may have self-resistance, and thus there may be a voltage drop between the point at which a current starts to be applied and the ending point thereof. In this case, the surface curvature of the first fluid 630 may be partially changed, and the partial change may cause the contact surface B on which the first fluid 630 is in contact with the cover glass 610 to have the shape of a distorted circle.

To maintain the surface curvature of the first fluid 630, the voltage drop of the transparent electrode pattern 650 may need to be compensated for.

To compensate for the voltage drop of the transparent electrode pattern 650, the transparent electrode pattern 650 may include a first channel on which a current flows clockwise, and a second channel on which a current flows counterclockwise with the same central axis as the first channel.

A voltage drop occurring on the first channel where a current is applied clockwise may be compensated for by a voltage drop occurring on the second channel where a current is applied counterclockwise.

That is, the average of the voltage drops occurring on the first and second channels may form a constant voltage between the first fluid 630 and the transparent electrode pattern 650.

The transparent electrode pattern 650 may include at least one pair of the first and second channels crossing with respect to the same central axis.

FIG. 6 illustrates an embodiment in which two pairs of the first and second crossing channels are provided.

A voltage drop occurring on channel 1 where a current flows clockwise may be compensated for by a voltage drop occurring on channel 2 where a current is applied counterclockwise.

A voltage drop occurring on channel 3 where a current flows clockwise may be compensated for by a voltage drop occurring on channel 4 where a current is applied counterclockwise.

Specifically, the transparent electrode pattern 650 includes a first conducting wire 651 and a second conducting wire 652. The first conducting wire 651 has the shape of a ring where one side thereof is opened, and the second conducting wire 652 is connected to both ends of the first conducting wire 651.

In this case, a voltage on the second conducting wire 642 formed in the shape of a straight line may partially change the surface curvature of the first fluid 620, compared to the first conducting wire 651 formed in the shape of a circle.

Thus, a structure capable of minimizing the effect of the second conducting wire 652 may need to be considered.

FIG. 7 is a view illustrating another example of the transparent electrode pattern 650 included in the liquid iris 600 according to the present disclosure.

To minimize the effect of the voltage applied to the second conducting wire 652 on the surface curvature of the first fluid 630 (see FIG. 5), the second conducting wire 652 is vertically connected to the first conducting wire 651

When the second conducting wire 652 is vertically connected, the effect of a potential difference between the first fluid 630 and the second conducting wire 652 may be minimized.

The size of the transparent electrode pattern 650 may be less than or equal to 1 um. In addition, when a nano-mesh structure is applied thereto, the size may be reduced up to 40 nm. In this case, if the length of the second conducting wire 652 decreases, the effect of the second conducting wire 652 on the first fluid 620 may be minimized.

If the shape of the contact surface B is not a perfect circle despite of the shape of the transparent electrode pattern 650 (see FIG. 5), the amount of incoming light depending on the potential difference may be calculated by a simulation. Thus, there may be no significant effect on the liquid iris 600 that controls the light amount ratio.

FIG. 8 is a conceptual view for explaining and comparing changes in the iris value F in liquid and mechanical irises according to an embodiment of the present disclosure.

As described above, the mechanical iris typically operates based on the VCM, and thus there may be restrictions in implementing the steps of the iris due to limitations on the performance and mechanical accuracy of a VCM driving unit.

In other words, when the diameter of the mechanical iris is adjusted, brightness changes in a graded manner.

Referring to FIG. 8, in the case of the mechanical iris, the iris value is fixed as follows: f/1.4, f/2, f/2.8, etc. That is, it is impossible to implement any values therebetween. However, in the case of the liquid iris 600 according to the present disclosure, it is possible to implement any values therebetween. That is, there is no discontinuity between the steps.

The graded brightness change of the mechanical iris has no problem in photographing a still image. However, the graded brightness change may be problematic in creating a video due to a sudden change in the brightness.

The liquid iris 600 according to the present disclosure may change the brightness gradually and continuously and thus obtain a smooth image.

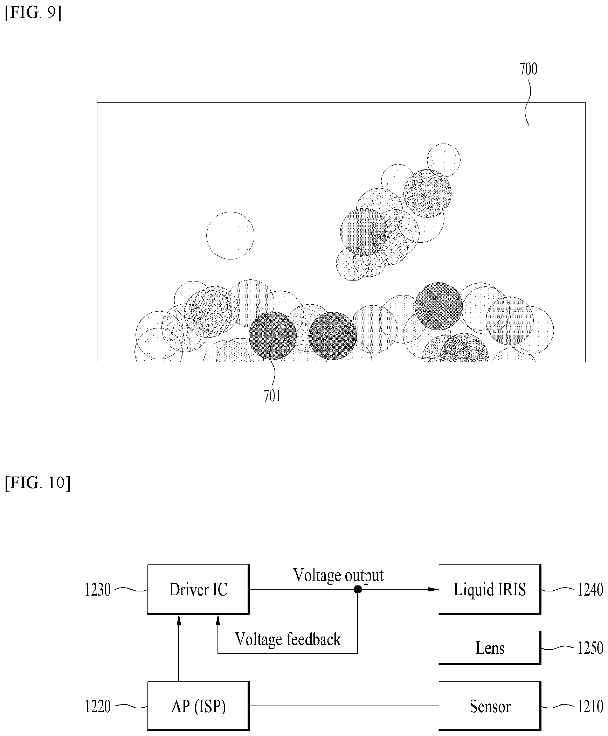

FIG. 9 is a view for explaining bokeh generated by the liquid iris 60 according to an embodiment of the present disclosure.

As a way of photographing an image 700, bokeh 701 is a technique that intentionally disturbing the focus of a lens. Basically, when a main subject is focused, there may be a blurred part, and it depends on the shape of an iris.

The bokeh 701 may be variously implemented by a bokeh filter with an opening with a specific shape on the lens

When there is no bokeh filter, the bokeh 701 depends on the shape of the iris. In particular, the liquid iris 600 according to the present disclosure may form a circular effective opening so that the bokeh 701 may be formed in the form of a circle.

FIG. 10 is a block diagram illustrating an optical device including a liquid iris 1240 according to an embodiment of the present disclosure.

Hereinafter, the basic structure of a system including the liquid iris 1240 will be described. An image sensor 1210 may convert light passing through the liquid iris 1240 and a lens 1250 into an electrical signal.

An image processing unit 1220 may perform image processing based on the signal from the image sensor 1210 and obtain information about focus.

A driving unit 1230 may receive the focus information from the image processing unit 1220 and generate a potential difference to the liquid iris 1240 based on the received information.

Specifically, based on the received focus information, the driving unit 1230 may determine the area of the effective opening (or contact surface B) on which the first fluid 630 is in contact with the cover glass 610.

However, since the system including the liquid iris 1240 according to the present disclosure has no iris steps, the system may not receive feedback about a physical opening size unlike the mechanical iris.

When there is no feedback, the driving unit 1230 may have repetition errors and may not perform compensation for characteristics between chips. As a result, it may be difficult to obtain reliability regarding the opening of the iris.

Therefore, the system including the liquid iris 1240 may receive feedback about a voltage output from the driving unit 1230 that generates the potential difference to the liquid iris 1240.

The driving unit 1230 of FIG. 10 may correspond to the controller configured to apply a voltage to the liquid iris 600 according to the present disclosure.

The controller may be fed back a potential difference between the first fluid 630 and the transparent electrode pattern 650 and maintain the potential difference between the first fluid 630 and the transparent electrode pattern 650 constantly.

That is, while changing the voltage applied to the liquid iris 1240, the driving unit 1230 or controller may receive feedback to maintain the voltage to be constant.

Although the present disclosure is described based on the liquid iris, the disclosure is also applicable to a camera including the liquid iris.

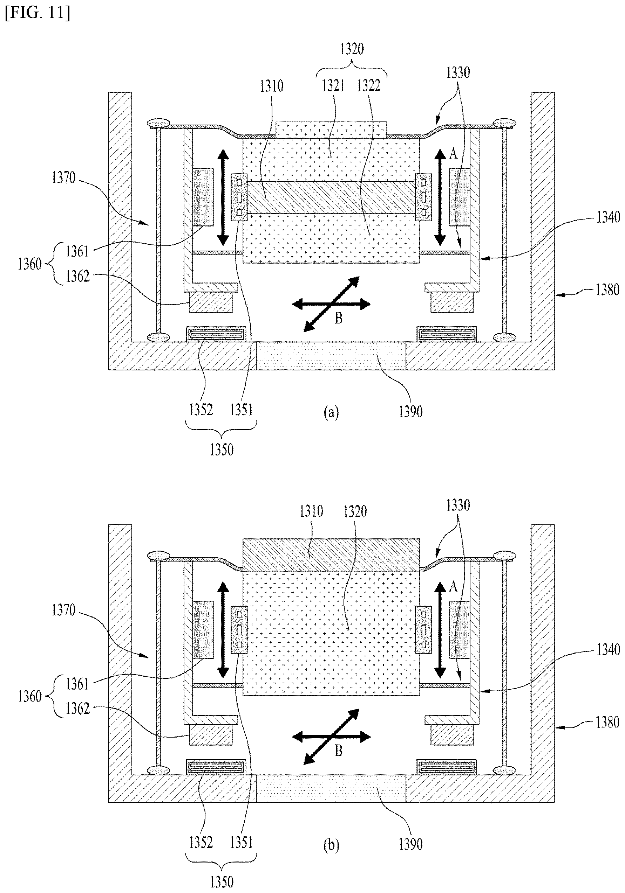

In particular, the liquid iris may be suitable for a camera for automatically adjusting the focus based on the VCM or sensing hand trembling. Details will be described with reference to FIG. 11.

FIG. 11 is a side cross-sectional view for explaining a structure in which a liquid iris 1310 according to an embodiment of the present disclosure is coupled to an optical device including a VCM-based auto focus actuator (AF) and an optical image stabilizer (OIS).

Since the liquid iris 1310 according to the present disclosure includes no magnet unlike the conventional VCM-based mechanical iris, it may minimize interference in a camera including at least one of the VCM-based AF and the OIS.

The liquid iris described with reference to FIGS. 9 and 10 may be applied to a camera including the VCM-based AF and OIS

The VCM-based AF and OIS controls a current through a coil and electromagnet to move a lens up, down, right, and left. However, since the liquid iris according to the present disclosure includes no magnet, there is no interference between magnets even if the liquid iris coexist with the VCM-based AF and OIS.

Thus, the camera including the VCM-based AF and OIS according to the present disclosure may include a housing configured to form a space, a bobbin configured to be disposed in the housing, a plurality of lenses configured to be disposed in the bobbin, a liquid iris configured to adjust the amount of light passing through the plurality of lenses, a coil configured to cover the outer circumference surface of the bobbin, a magnet configured to be disposed on the inner side surface of the housing and face the coil, and an image sensor unit configured to convert the light passing through the plurality of lenses and the liquid iris into an electrical signal. The liquid iris may include an insulating layer made of a transparent material, a cover glass configured to be spaced apart from the insulating layer, a first fluid configured to be provided between the insulating layer and the cover glass and form a path through which the light passes, a second fluid configured to be provided between the insulating layer and the cover glass, which is an opaque fluid and immiscible with the first fluid, a transparent electrode pattern configured to be provided under the insulating layer and form a potential difference from the first fluid, and a controller configured to change the surface curvature of the first fluid by controlling the potential difference and control an area in which the first fluid is in contact with the cover glass.

Referring to FIG. 11, the liquid iris 1310 and a lens unit 1320 may be coupled to the bobbin in the camera according to the present disclosure. The lens unit 1320 may include a plurality of additional lenses in addition to a first lens 1321 and a second lens 1322.

The bobbin may be coupled to an AF housing 1340 through an AF leaf spring 1330. The bobbin may be moved up and down (A) by a first magnet 1361 and a first coil 1531 in the AF housing 1340 so that the bobbin may adjust focus recognized by an image sensor 1390.

The AF housing 1340 may be coupled to an OIS housing 1380 through an OIS wire spring. The AF housing 1340 may be moved left and right by a second magnet 1362 and a second coil 1352 so that it prevents hand trembling.

The VCM-based AF and OIS may not be limited to the structure shown in FIG. 11.

The liquid iris 1310 according to the present disclosure may be useful in that there is no interference between magnets even though the liquid iris 1310 is included in the camera including the VCM-based AF and OIS.

The liquid iris 1310 according to the present disclosure may be provided on or between the plurality of lenses 1320 in that there is no interference between magnets in the camera.

The liquid iris 1310 according to the present disclosure may be applied to a mobile terminal by itself or as the optical device of FIG. 11.

That is, if a mobile terminal includes a display and an optical device provided on the front surface of the display, the optical device may include the liquid iris according to the present disclosure or correspond to the optical device of FIG. 11.

The above-described embodiments are to be construed in all aspects as illustrative and not restrictive. The scope of the present invention should be determined by the appended claims.

## Claims

1. A liquid iris for adjusting an amount of light penetration based on an applied electrical signal, the liquid iris comprising:

   an insulating layer (640) made of a transparent material;
   a cover glass (610) configured to be spaced apart from the insulating layer;
   a first fluid (630) configured to be provided between the insulating layer (640) and the cover glass (610) and form a path through which light passes;
   a second fluid (620) configured to be provided between the insulating layer (640) and the cover glass (610), wherein the second fluid (620) is an opaque fluid and immiscible with the first fluid (630);
   a transparent electrode pattern (650) configured to be provided under the insulating layer (640) and form a potential difference from the first fluid (630); and
   a controller configured to change a surface curvature of the first fluid (630) by controlling the potential difference and control an area in which the first fluid (630) is in contact with the cover glass (610),
   wherein the transparent electrode (650) pattern includes a first channel and a second channel having a same central axis wherein each channel of the the transparent electrode pattern (650) comprises
   a first conducting wire (651) configured to have a ring shape at a bottom of the insulating layer (640), wherein one side thereof is opened to form a first end and a second end,
   a second conducting wire (652) configured to be vertically connected to the first end of the first conducting wire (651), and
   a third conducting wire configured to be vertically connected to the second end of the first conducting wire (651), and

   wherein the controller is configured to apply a current to the first end of the first channel through the second conducting wire (652) and the second end of the second channel through the third conducting wire.

2. The liquid iris of claim 1, wherein the first fluid (630) includes electrolytes or is a polar liquid.

3. The liquid iris of claim 1, wherein the second fluid (620) includes no electrolytes or is a non-polar liquid.

4. The liquid iris of claim 3, wherein the second fluid (620) is a black oil for blocking visible and infrared bands of the light.

5. The liquid iris of claim 1, wherein the first fluid (630) forms a circular contact surface on the cover glass (610) based on the potential difference.

6. The liquid iris of claim 1, wherein the transparent electrode pattern (650) has at least one pair of the first and second channels crossing with each other with respect to the same central axis.

7. The liquid iris of claim 1, wherein the controller is configured to:

   receive feedback about the potential difference between the first fluid (630) and the transparent electrode pattern (650); and
   maintain the potential difference between the first fluid (630) and the transparent electrode pattern (650) constantly.

8. An optical device with a voice coil motor (VCM) based autofocus function, the optical device comprising:

   a housing configured to form a space;
   a bobbin configured to be disposed in the housing;
   a plurality of lenses configured to be disposed in the bobbin;
   a liquid iris according to any one of claims 1 to 7;
   a coil configured to cover an outer circumference surface of the bobbin;
   a magnet configured to be disposed on an inner side surface of the housing and face the coil; and
   an image sensor configured to convert the light passing through the plurality of lenses and the liquid iris into an electrical signal.

9. The optical device of claim 8, wherein the liquid iris is configured to be provided on or between the plurality of lenses.

10. The optical device of claim 9, further comprising an image processor configured to perform image processing based on the electrical signal from the image sensor.

11. The optical device of claim 10, wherein the controller is configured to:

> receive focus information from the image processor; and
> determine the area in which the first fluid (630) is in contact with the cover glass (610) based on the focus information.

12. A mobile terminal, comprising:

> a display; and
> an optical device configured to be disposed on a front surface of the display,
> wherein the optical device comprises the liquid iris of any one of claims 1 to 7.

**Patentansprüche**

1. Flüssige Iris zum Einstellen einer Lichteinfallsmenge basierend auf einem angelegten elektrischen Signal, wobei die flüssige Iris aufweist:

> eine aus einem transparenten Material hergestellte Isolierschicht (640);
> ein Abdeckglas (610), das derart konfiguriert ist, dass es von der Isolierschicht beabstandet ist;
> ein erstes Fluid (630), das derart konfiguriert ist, dass es zwischen der Isolierschicht (640) und dem Abdeckglas (610) bereitgestellt ist und einen Weg, den das Licht durchläuft, bildet;
> ein zweites Fluid (620), das derart konfiguriert ist, dass es zwischen der Isolierschicht (640) und dem Abdeckglas (610) bereitgestellt wird, wobei das zweite Fluid (620) ein opakes Fluid ist und nicht mit dem ersten Fluid (630) vermischbar ist;
> ein transparentes Elektrodenmuster (650), das derart konfiguriert ist, dass es unter der Isolierschicht (640) bereitgestellt ist und eine Potentialdifferenz zu dem ersten Fluid (630) bildet; und
> eine Steuerung, die konfiguriert ist, um eine Oberflächenkrümmung des ersten Fluids (630) durch Steuern der Potentialdifferenz zu ändern und einen Bereich, in dem das erste Fluid (630) in Kontakt mit dem Abdeckglas (610) ist, zu steuern,
> wobei das transparente Elektrodenmuster (650) einen ersten Kanal und einen zweiten Kanal mit einer gleichen Mittelachse umfasst, wobei jeder Kanal des transparenten Elektrodenmusters (650) aufweist: einen ersten Leiterdraht (651), der an einer Unterseite der Isolierschicht (640) derart konfiguriert ist, dass er eine Ringform hat, wobei eine seiner Seiten geöffnet ist, um ein erstes Ende und ein zweites Ende zu bilden, einen zweiten Leiterdraht (652), der derart konfiguriert ist, dass er vertikal mit dem ersten Ende des ersten Leiterdrahts (651) verbunden ist, und einen dritten Leiterdraht, der derart konfiguriert ist, dass er mit dem zweiten Ende des ersten Leiterdrahts (651) vertikal verbunden ist, und wobei die Steuerung konfiguriert ist, um durch den zweiten Leiterdraht (652) einen Strom an das erste Ende des ersten Kanals und durch den dritten Leiterdraht an das zweite Ende des zweiten Kanals anzulegen.

2. Flüssige Iris nach Anspruch 1, wobei das erste Fluid (630) Elektrolyte umfasst oder eine polare Flüssigkeit ist.

3. Flüssige Iris nach Anspruch 1, wobei das zweite Fluid (620) keine Elektrolyte umfasst oder eine nicht polare Flüssigkeit ist.

4. Flüssige Iris nach Anspruch 3, wobei das zweite Fluid (620) ein schwarzes Öl ist, um sichtbare und Infrarot-Lichtbänder zu sperren.

5. Flüssige Iris nach Anspruch 1, wobei das erste Fluid (630) basierend auf der Potentialdifferenz eine kreisförmige Kontaktoberfläche auf dem Abdeckglas (610) bildet.

6. Flüssige Iris nach Anspruch 1, wobei das transparente Elektrodenmuster (650) wenigstens ein Paar erster und zweiter Kanäle hat, die einander in Bezug auf die gleiche Mittelachse schneiden.

7. Flüssige Iris nach Anspruch 1, wobei die Steuerung konfiguriert ist, um:

> Rückmeldungen über die Potentialdifferenz zwischen dem ersten Fluid (630) und dem transparenten Elektrodenmuster (650) zu empfangen; und
> die Potentialdifferenz zwischen dem ersten Fluid (630) und dem transparenten Elektrodenmuster (650) konstant zu halten.

8. Optische Vorrichtung mit einer Autofokusfunktion auf Basis eines Schwingspulenmotors (VCM), wobei die optische Vorrichtung aufweist:

> ein Gehäuse, das konfiguriert ist, um einen Raum auszubilden;

ein Spulenkörper, der derart konfiguriert ist, dass er in dem Gehäuse angeordnet ist;

mehrere Linsen, die derart konfiguriert sind, dass sie in der Spule angeordnet sind;

eine flüssige Iris nach einem der Ansprüche 1 bis 7;

eine Spule, die derart konfiguriert ist, dass sie eine Außenumfangsoberfläche des Spulenkörpers bedeckt;

einen Magneten, der derart konfiguriert ist, dass er auf einer Innenseitenoberfläche des Gehäuses angeordnet und der Spule zugewandt ist; und

einen Bildsensor, der konfiguriert ist, um das Licht, das die mehreren Linsen und die flüssige Iris durchläuft, in ein elektrisches Signal umzuwandeln.

9. Optische Vorrichtung nach Anspruch 8, wobei die flüssige Iris derart konfiguriert ist, dass sie auf oder zwischen den mehreren Linsen bereitgestellt wird.

10. Optische Vorrichtung nach Anspruch 9, die ferner einen Bildprozessor aufweist, der konfiguriert ist, um basierend auf dem elektrischen Signal von dem Bildsensor eine Bildverarbeitung durchzuführen.

11. Optische Vorrichtung nach Anspruch 10, wobei die Steuerung konfiguriert ist, um:

Fokusinformationen von dem Bildprozessor zu empfangen; und

basierend auf den Fokusinformationen den Bereich, in dem das erste Fluid (630) in Kontakt mit dem Abdeckglas (610) ist, zu bestimmen.

12. Mobiles Endgerät, das aufweist:

eine Anzeige; und

eine optische Vorrichtung, die derart konfiguriert ist, dass sie auf einer vorderen Oberfläche der Anzeige angeordnet wird,

wobei die optische Vorrichtung die flüssige Iris nach einem der Ansprüche 1 bis 7 aufweist.

**Revendications**

1. Iris liquide pour ajuster une quantité de pénétration de lumière sur la base d'un signal électrique appliqué, l'iris liquide comprenant :

une couche isolante (640) faite d'un matériau transparent ;

un verre protecteur (610) configuré pour être espacé de la couche isolante ;

un premier fluide (630) configuré pour être fourni entre la couche isolante (640) et le verre protecteur (610) et former un chemin à travers lequel la lumière passe ;

un deuxième fluide (620) configuré pour être fourni entre la couche isolante (640) et le verre protecteur (610), dans lequel le deuxième fluide (620) est un fluide opaque et immiscible avec le premier fluide (630) ;

un motif d'électrode transparent (650) configuré pour être fourni sous la couche isolante (640) et former une différence de potentiel par rapport au premier fluide (630) ; et

un dispositif de commande configuré pour modifier une courbure de surface du premier fluide (630) en commandant la différence de potentiel et commander une zone dans laquelle le premier fluide (630) est en contact avec le verre protecteur (610),

dans lequel le motif d'électrode transparent (650) comporte un premier canal et un deuxième canal ayant un même axe central, dans lequel chaque canal du motif d'électrode transparent (650) comprend

un premier fil conducteur (651) configuré pour avoir une forme d'anneau au niveau d'un dessous de la couche isolante (640), dans lequel un côté de celui-ci est ouvert pour former une première extrémité et une deuxième extrémité,

un deuxième fil conducteur (652) configuré pour être relié verticalement à la première extrémité du premier fil conducteur (651), et

un troisième fil conducteur configuré pour être relié verticalement à la deuxième extrémité du premier fil conducteur (651), et

dans lequel le dispositif de commande est configuré pour appliquer un courant à la première extrémité du premier canal par l'intermédiaire du deuxième fil conducteur (652) et à la deuxième extrémité du deuxième canal par l'intermédiaire du troisième fil conducteur.

2. Iris liquide selon la revendication 1, dans lequel le premier fluide (630) comporte des électrolytes ou est un liquide polaire.

3. Iris liquide selon la revendication 1, dans lequel le deuxième fluide (620) ne comporte pas d'électrolytes ou est un liquide non polaire.

4. Iris liquide selon la revendication 3, dans lequel le deuxième fluide (620) est une huile noire pour bloquer les bandes visible et infrarouge de la lumière.

5. Iris liquide selon la revendication 1, dans lequel le premier fluide (630) forme une surface de contact circulaire sur le verre protecteur (610) sur la base de la différence de potentiel.

6. Iris liquide selon la revendication 1, dans lequel le motif d'électrode transparent (650) a au moins une paire des premier et deuxième canaux se croisant l'un l'autre par rapport au même axe central.

7. Iris liquide selon la revendication 1, dans lequel le dispositif de commande est configuré pour :

recevoir un retour concernant la différence de potentiel entre le premier fluide (630) et le motif d'électrode transparent (650) ; et maintenir la différence de potentiel entre le premier fluide (630) et le motif d'électrode transparent (650) constante.

8. Dispositif optique avec une fonction de mise au point automatique basée sur un moteur à bobine acoustique (VCM), le dispositif optique comprenant :

un boîtier configuré pour former un espace ; un bobinot configuré pour être disposé dans le boîtier ; une pluralité de lentilles configurées pour être disposées dans le bobinot; un iris liquide selon l'une quelconque des revendications 1 à 7 ; une bobine configurée pour couvrir une surface de circonférence extérieure du bobinot ; un aimant configuré pour être disposé sur une surface latérale intérieure du boîtier et faire face à la bobine ; et un capteur d'image configuré pour convertir la lumière passant à travers la pluralité de lentilles et l'iris liquide en un signal électrique.

9. Dispositif optique selon la revendication 8, dans lequel l'iris liquide est configuré pour être fourni sur ou entre la pluralité de lentilles.

10. Dispositif optique selon la revendication 9, comprenant en outre un processeur d'image configuré pour réaliser un traitement d'image sur la base du signal électrique provenant du capteur d'image.

11. Dispositif optique selon la revendication 10, dans lequel le dispositif de commande est configuré pour :

recevoir des informations de mise au point du processeur d'image ; et déterminer la zone dans laquelle le premier fluide (630) est en contact avec le verre protecteur (610) sur la base des informations de mise au point.

12. Terminal mobile, comprenant :

un écran ; et un dispositif optique configuré pour être disposé sur une surface avant de l'écran,

dans lequel le dispositif optique comprend l'iris liquide selon l'une quelconque des revendications 1 à 7.

[FIG. 1a]

[FIG. 1b]

[FIG. 1c]

[FIG. 2]

Optical Path

[FIG. 3]

(a)

(b)

[FIG. 4]

600

610
620
630
640
650

[FIG. 5]

610
620
630
640
650

620    B    630

(a)

(b)

(c)

[FIG. 6]

[FIG. 7]

650

651

652

[FIG. 8]

1 click

1/3 stop

1 stop

Liquid IRIS

Mechanical IRIS

EF Lens, 1/3 stop

Cinema Lens

f / 16
f / 11
f / 8
f / 5.6
f / 4
f / 2.8
f / 2
f / 1.4

[FIG. 9]

700

701

[FIG. 10]

[FIG. 11]

(a)

(b)

**EP 3 767 359 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9128350 B1
- EP 3255491 A1
- US 2014191107 A1